(19)

Europäisches
Patentamt
European
Patent Office
Office européen
des brevets

(11) **EP 4 067 514 A1**

(12) **EUROPEAN PATENT APPLICATION**

(43) Date of publication:
**05.10.2022 Bulletin 2022/40**

(21) Application number: **21165681.4**

(22) Date of filing: **29.03.2021**

(51) International Patent Classification (IPC):
***C22B 11/00*** *(2006.01)*      ***C25B 1/00*** *(2021.01)*

(52) Cooperative Patent Classification (CPC):
**C22B 11/04; C22B 11/042; C25B 1/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **VITO NV**
  **2400 Mol (BE)**

• **Katholieke Universiteit Leuven**
  **3000 Leuven (BE)**

(72) Inventor: **The designation of the inventor has not
yet been filed**

(74) Representative: **Arnold & Siedsma
Bezuidenhoutseweg 57
2594 AC The Hague (NL)**

(54) **A PROCESS FOR PRECIPITATING PARTICLES OF PLATINUM GROUP METALS**

(57)    The present invention relates to a process for recovering platinum group metals from a feed containing one or more precursor compounds of one or more platinum group metal ions, wherein the process comprises the steps of
(i) supplying to a cathode compartment of an electrochemical cell equipped with a cathode comprising a gas diffusion electrode with a porous electrochemically active material, the feed containing the one or more precursor compounds to form a liquid phase in the cathode compartment,
(ii) supplying a $CO_2$ containing gas to the cathode compartment,
(iii) applying a potential to the cathode which is such as to cause electrochemical reduction of the $CO_2$ to CO,
(iv) and recovering from the liquid phase precipitated particles of the one or more platinum group metals in elemental form.

**Description**

The present invention relates to a process for recovering platinum group metals from a feed containing one or more precursor compounds of one or more platinum group metal ions, according to the preamble of the first claim.

In recent years, metal-based nanoparticles have received a large amount of attention since metals often have totally different properties when they are in the nanometric scale. Platinum group metals such as Pt, Pd, Rh nanoparticles gained special interest because of their unique catalytic properties. Platinum group metals, although expensive and with limited geological sources, are yet the best catalysts for proton exchange membrane fuel cells (PEMFC) or direct alcohol fuel cells (DAFC). Nowadays, strategies for the synthesis of platinum group metal nano particles aim at optimizing the properties of the nanoparticles and of reducing the amount of metal needed. Otherwise, strategies that can achieve the secondary recovery of platinum group metals, preferably in the form of nanoparticles are highly sought.

Frequently used methods for the synthesis of platinum group metal nanoparticles include chemical reduction using hydrogen gas as reducing agent, for example for the controlled-shape synthesis of colloidal Pt nanoparticles. When using $H_2$ for the synthesis of carbon supported Pt metal nanoparticles (Zhang et al. 2013[12]), it has been found that in the absence of CO, the use of pure $H_2$ produces large and polydisperse particles, while in the presence of CO, monodisperse Pt nano-cubes are formed. In the majority of the methods disclosed $H_2$ and/or CO are introduced to the system reaction either by bubbling it into to the solution containing the platinum group metal compound or by contacting the platinum group metal feed with the gas flow into purposively designed furnaces, at different temperatures. A few reports disclose the use of $H_2$ generated electrochemically from the water reduction reaction (WRR) to synthesized Pt nanoparticles with defined crystalline orientations.[13]

To date no method has been disclosed which permits to effectively recover platinum group metals in their elemental form from diluted liquid feed streams of precursor compounds containing the corresponding platinum group metal ions dissolved, dispersed or suspended therein.

The known methods for synthesizing or recovering nanoparticles of Pt group metals are disadvantageous in the sense that they are neither selective, nor sustainable: some methods require the addition of hazardous chemical reagents which need to be removed after the metal recovery, the use of a supporting material, or $H_2$ is supplied using vigorous bubbling. Some of the known methods are energy consuming as they must be carried out at relatively high temperatures like 200 °C. Some methods make use of expensive electrode materials like Pt electrodes, and are therefore not suitable for recovering Pt.

EP3242963B1 discloses the electrochemical synthesis of nanoparticles of metaloxides or metal hydroxides, such as iron oxide, copper and zinc hydroxychlorides (spin transition materials), scorodite and mixed metal (hydr)oxide libraries (i.e., birnessites, layered double hydroxides, and spinels), by a process called gas-diffusion electrocrystallization (GDEx). According to the method of EP3242963B1, oxygen is supplied to a solution containing compounds of these metals dissolved therein and is reduced on the gas-diffusion cathode, thereby producing hydroxyl ions ($OH^-$) and strong oxidants ($H_2O_2$ and $HO_2^-$), which act as reactive intermediaries for the precipitation by chemical oxidation of stable nanoparticles of compounds of the metals. EP3242963B1 does however not disclose precipitation of platinum group metals in their elemental form from a feed containing precursor compounds of the corresponding metal ions.

There is thus a need for a process which permits isolating platinum group metals in their elemental form from complex feed streams which contain one or more precursor compounds of one or more platinum group metal ions.

The present invention therefore aims at providing a process for recovering particles of platinum group metals in their elemental form, from a feed containing one or more precursor compounds of one or more platinum group metals.

This is achieved according to the invention with a process showing the technical features of the characterizing portion of the first claim.

Thereto the process of this invention process for recovering platinum group metals from a feed containing one or more precursor compounds of one or more platinum group metal ions, comprises the following steps :

(i) supplying to a cathode compartment of an electrochemical cell equipped with a cathode comprising a gas diffusion electrode with a porous electrochemically active material, the feed containing the one or more precursor compounds to form a liquid phase in the cathode compartment;
(ii) supplying a $CO_2$ containing gas to the cathode compartment,
(iii) applying a potential to the cathode which is such as to cause electrochemical reduction of the $CO_2$ to CO,
(iv) and recovering from the liquid phase precipitated particles of the one or more platinum group metals in elemental form.

The feed may originate from a wide variety of sources, and will often be of industrial origin. The feed may in particular originate from processes for recovering platinum group metals or precious metals from end-of-life products, for example from recyclables such as circuit boards, electronic appliances, catalysts, fuel cells, glass, ceramics, pigments, medical dental, pharmaceuticals, photovoltaics, superalloys etc. A problem with such industrial waste feeds is that the concentration of the platinum group metal ions may be rather low, in the order of a few hundred g per ton of waste. The feed will often be water-based, although one or more organic solvents may be present as well.

The feed containing the one or more precursor compounds of the one or more platinum metal group ions may be supplied to the cathode compartment either as a solid or a liquid feed containing the one or more precursor compounds. A liquid feed may either be a solution containing the one or more precursor compounds of the one or more platinum group metal ions dissolved therein, or a dispersion or a suspension of the one or more precursor compounds in a liquid dispersant.

It shall be clear to the skilled person that the liquid phase in the cathode compartment contains the feed.

It has surprisingly been found that the process of this invention makes it possible to precipitate from a feed containing one or more precursor compounds of one or more platinum group metal ions, particles or clusters of particles of the corresponding platinum group metals in their elemental form. These particles are suitable to be recovered for further use. The precipitation of particles of the platinum group metals in their elemental form has been found to mainly occur in the catholyte, and to permit a simplified recovering of the metal particles from a liquid phase.

The precipitated particles may take the form of nanoparticles with a particle size of maximum 100 nm or smaller. The precipitated particles may also take the form of agglomerates or clusters of metal particles, wherein the clusters or agglomerates have a larger particle size than 100 nm. Advantageously, the process of this invention permits controlling the size of the particles by manipulating one or more process parameters. With the view of controlling the particle size of the precipitated particles for instance, the concentration of the one or more precursor compounds, a flow rate with which electrolyte is supplied to the cathode compartment, the gas flow rate, the electrolyte conductivity, etc., can be varied.

The particles may either comprise one single type of platinum group metal or a mixture of two or more different platinum group metals, depending on the composition of the feed.

The platinum group metal particles may thus be recovered in a form which is particularly suitable for further processing. In an example, the precipitated particles of elemental platinum group metals may be re-dissolved in a suitable solvent for use in a particular application, they may be dispersed in a dispersant to provide a suspension or a slurry, or they may be formed into dry pellets.

Advantageously, the process of this invention is an electrochemical process and the electrical charge consumed is mainly related to electrochemical reduction of $CO_2$ to CO. When water is present in the liquid phase, reduction of water to H2 contributes to electrical charge consumption. The use of a gas-diffusion electrode solves the problem of the low solubility of $CO_2$, especially in aqueous-feed systems as $CO_2$ may be supplied to the gas side of the gas diffusion electrode, where upon polarization of the gas diffusion electrode, electrochemical reduction of $CO_2$ to CO takes place. This reduction reaction mainly takes place in the active surface of the gas diffusion electrode. Although under these conditions the electrochemical reduction of the platinum group metal ions into their elemental form would be possible, this is a feature that may be minimized by this invention. This is an advantage as precipitation in the electrode would limit the extent to which particle size can be controlled, and would complicate recovering of the metal particles - often requiring destruction of the electrode.

The inventors assume, without wanting to be bound by this theory, that under the conditions of the present invention CO is the main reaction product of $CO_2$ reduction at the gas diffusion electrode. The CO formed by the reduction of $CO_2$ is capable of interacting with the platinum group metal clusters thereby formed and of thereby controlling the size of the metallic particles formed. CO may for example act as a caping agent capable of controlling the size of the metallic particles. This is surprising, as according to the teaching of EP3242963B1 CO would rather be expected to act as a chemical oxidant.

Although some platinum group metal ion reduction may take place at the surface of the gas diffusion electrode, often by electrochemical reduction, reduction of the platinum group metal ions will mainly take place in the cathode compartment, in particular in the catholyte. The inventors believe, without wanting to be bound by this assumption, that reduction of the platinum group metals mainly occurs at a position adjacent to the electrode, where the reaction products of the $CO_2$ reduction, mainly CO, forms a reaction front that extends into the electrolyte. Transport of CO into the electrolyte is assumed to occur at a faster rate than the transport of the platinum group metal ions from the solution towards the electrode. Reduction at the electrode surface will usually remain limited, and will often even be absent, because of the low platinum group metal ion concentrations in the liquid phase and the concomitant mass transport limitation. This is an advantage as it facilitates recovery of the platinum group metal particles from the liquid phase and obviates the need of separating the metal particles from the electrode.

The process of the present invention may be carried out as a continuous process, a batch process, and the liquid phase contained in the cathode compartment may be recirculated.

In a preferred embodiment, the liquid phase may contain one or more solvents selected from the group comprising water, a protic solvent capable of generating H2, an organic solvent selected from the group of dimethylsulfoxide (DMSO), dimethylformamide (DMF), acetone, an ionic liquid, a deep eutectic solvent, and mixtures of two or more hereof. Thereby, the protic solvent is preferably selected from the group comprising an alcohol, ammonia, an amine, an amide, an ionic liquid, acetic acid, and mixtures of two or more of the afore mentioned compounds. In particular, the alcohol may be selected from the group comprising methanol, ethanol, n-propanol and isopropylalcohol and mixtures of two or more hereof. Preferably the feed contains water, as waste streams of industrial origin will usually be water based.

Where water is present in the liquid phase in the cathode compartment, either originating from the feed or from the catholyte, the water reduction reaction producing $H_2$ is assumed to take place simultaneously (reaction 3).[22] Advantageously, the process of this invention is an electrochemical process in which $H_2$ is generated in the liquid phase.

$$CO_2 + 2H^+ + 2e^- \rightleftarrows CO + H_2O \quad E^0 = -0.106 \; V_{SHE} \quad (1)$$

$$CO_2 + 2H_2O + 2e^- \rightleftarrows CO + 2OH^- \quad E^0 = -0.934 \; V_{SHE} \quad (2)$$

$$2H_2O + 2e^- \rightleftarrows H_2 + 2OH^- \quad E^0 = -0.828 \; V_{SHE} \quad (3)$$

The use of a gas diffusion electrode allows supplying sufficient amounts of $CO_2$ and achieving $H_2$ formation to an extent sufficient for precipitating particles of platinum group metals in their elemental form from the feed. Without wanting to be bound by this theory, the inventors assume that the $H_2$ formed when the liquid phase contains a protic solvent, causes a chemical reduction of the platinum group metal ions that have been supplied to the cathode compartment, into their elemental form.

Other reaction products resulting from $CO_2$ reduction include :

$$CO_2 + 2H^+ + 2e^- \rightleftarrows HCOOH \quad E° = -0.250 \; V_{SHE}$$

$$CO_2 + 2H_2O + 2e^- \rightleftarrows HCOO^- + OH^- \quad E° = -1.078 \; V_{SHE}$$

$$CO_2 + 6H^+ + 6e^- \rightleftarrows CH_3OH + H_2O \quad E° = 0.016 \; V_{SHE}$$

$$CO_2 + 5H_2O + 6e^- \rightleftarrows CH_3OH + 6OH^- \quad E° = -0.812 \; V_{SHE}$$

$$CO_2 + 8H^+ + 8e^- \rightleftarrows CH_4 + 2H_2O \quad E° = 0.169 \; V_{SHE}$$

$$CO_2 + 6H_2O + 8e^- \rightleftarrows CH_4 + 8OH^- \quad E° = -0.659 \; V_{SHE}$$

$$2CO_2 + 12H^+ + 12e^- \rightleftarrows CH_2CH_2 + 4H_2O \quad E° = 0.\,064 \; V_{SHE}$$

$$2CO_2 + 8H_2O + 12e^- \rightleftarrows CH_2CH_2 + 12OH^- \quad E° = -0.764 \; V_{SHE}$$

It is remarked that these reactions mainly take place in the presence of an electrocatalyst, and are negligible in the absence of an electrocatalyst.

In the presence of an organic solvent, besides CO other caping agents may be formed, for example citric acid and/or oxalic acid, which may assist in controlling the particle size of the precipitated elemental platinum metal particles.

In a preferred embodiment, $CO_2$ is supplied to the gas diffusion electrode, in particular to a gas side of the gas diffusion electrode.

The liquid feed containing the one or more platinum group metal ions may be a water containing liquid feed. Besides water, the liquid feed may contain one or more of a variety of the frequently used industrial solvents, examples hereof are disclosed above. More preferably the liquid feed containing the one or more platinum group metal ions is a liquid feed of such metal compounds in water.

If water is present in the catholyte, it is assumed that $CO_2$ reduction to CO is accompanied by the following reactions, which additionally give rise to the formation of $H_2$ :

$$CO_2 + 2H_2O + 2e^- \rightleftarrows CO + 2OH^- \quad E^0 = -0.934 \; V_{SHE} \quad (2)$$

$$2H_2O + 2e^- \rightleftarrows H_2 + 2OH^- \quad E^0 = -0.828 \; V_{SHE} \quad (3)$$

Although the main reduction product resulting from the $CO_2$ reduction according to this invention will be CO, it is not excluded that side products may be formed, especially if an organic solvent is present in the liquid phase. Examples of such $CO_2$ reduction side products include oxalate, formate, acetate, citrate, methanol, ethanol, methane, ethylene, ethylene oxide and other compounds generally known to the skilled person, and it has been observed that their presence does not adversely affect the desired metal ion reduction or the precipitation of platinum group metals in their metallic form. However, for the formation of at least some of these products to take place, the presence of an electrocatalyst is

required.

$CO_2$ gas may be supplied either to a gas compartment of the gas diffusion electrode or to the liquid phase, or both. Where formation of nano particles or smaller sized particles is envisaged, $CO_2$ gas will preferably be supplied to the gas compartment of the gas diffusion electrode. Where formation of particles of a larger size is envisaged, for example a size above 100 nm, $CO_2$ gas may be supplied to the liquid phase. Supplying $CO_2$ to the liquid phase presents the additional advantage of minimizing the risk to the formation of platinum metal group hydroxides, and favours the formation of metallic particles.

The feed containing the one or more platinum group metal ions may contain one single type of platinum group metal ions or a mixture of two or more different platinum group metal ions. The process of this invention makes it possible to obtain precipitation of the platinum group metals in their elemental form, independently of the nature of the platinum group metal.

The process of the present invention will usually be carried out at a temperature which is below the boiling point of the liquid phase. In a preferred embodiment where the liquid phase contains water, the process of this invention is preferably carried out at a temperature of maximum 100°C, preferably at a temperature of between 10°C and 100°C, more preferably between 15-75°C, most preferably between 15-50°C, in particular a temperature of about room temperature. Prior art processes to the contrary require the use of high temperatures above 100°C, often up to 210 °C and are therefore energy consuming.

The process of the present invention may advantageously be carried out in one single step, in one single reactor, at atmospheric pressure and moderate temperature.

The pH of the liquid phase at the start of the process of the present invention may vary in a wide pH range, but preferably the pH of the liquid phase when starting the process is maximum 5.0, preferably maximum 4.0, more preferably maximum 3.0. At these pH values, the risk to precipitation of the platinum group metals as hydroxides may be minimized. The inventors have observed that in the course of the reaction, the pH of the catholyte may gradually progresses towards an alkaline pH. In an embodiment of this invention the pH of the liquid phase may be left to evolve as the precipitation of the platinum group metals in their metallic form proceeds. In practice, products resulting from the electrochemical reduction of CO2 as described above, will act as a buffer, and thereby counteract unwanted rise of the pH of the liquid phase. Usually the pH will increase up to a certain maximum pH, which depends on the composition of the liquid phase. According to an alternative embodiment, a buffer may be added to the liquid phase in order to maintain the pH within the above mentioned limits. According to a preferred embodiment the pH may be kept below 10, more preferably below 8.0, most preferably below 7.0.

The pH of the liquid phase at the start of the process of the present invention may be at least 7.0, preferably at least 8.0, more preferably about 9.0, or even 11.0 for example in case precipitation of elemental Pt is aimed at. The pH may be left to evolve in the course of the reaction, often this will mean a decrease, for example to a pH of 8.0 or 9.0.

The pH of the liquid phase at the start of the process of the present invention is preferably adapted taking into account the nature of the platinum group metal ions present in the liquid phase. Advantageously if the liquid phase exclusively contains Pt ions as platinum group metal ions, the pH may be left to evolve up to a pH of 11 as only above that pH the formation of Pt hydroxide is expected to occur.

Within the scope of this invention with platinum group metals is meant, one or more metals selected from the group of Pd, Pt, Rh, Ru, Os, Ir, including mixtures of two or more of these metals. The individual metal ions may be present in the feed in similar concentrations, but the concentrations of the individual platinum group metal ions may also be different. The metal ions may be present in the feed in a single oxidation state, for example as $Pd^{2+}$ or $Rh^{3+}$. The metal ions may however also be contained in the feed in two or more different oxidation states, for example as a mixture of $Pt^{2+}$ and $Pt^{4+}$. It shall be clear that the feed may contain the platinum group metal in their elemental form as well, for example as $Pt^0$, $Pd^0$ or $Rh^0$. Usually such particles of metals in their elemental form may act as crystallization seeds.

The process of this invention is suitable for recovering platinum group metals from solutions of widely varying origin. The process of this invention is suitable for recycling platinum group metals from end-of-life applications, for example platinum group metal ions in feed originating from catalytic convertors, printed circuit boards, electronic components, etc. The process of this invention is equally suitable for recycling platinum group metals from waste streams, for example slags, tailings, waste waters, leachates etc.

Where the process of this invention is mainly used to recover platinum group metals from industrial waste streams, the concentration of the platinum group metal ions in these waste streams may be rather low (e.g., ppm to ppb range). The process of this invention is however also suitable for recovering metals from more concentrated solutions.

The $CO_2$ may be supplied as a pure gas or in the form of a gas mixture with further gases, for example one or more inert gases such as He, Ar, $N_2$. If so desired, the $CO_2$ containing gas may comprise air, syngas, or any other $CO_2$ containing gas. Although competing reactions may occur when using air, syngas or any other $CO_2$ containing gas, those competing reactions may either be negligible or they may be acceptable.

When using a mixture of gases the skilled person will be capable of adjusting the molar fraction of the $CO_2$ in such a way that it is sufficiently high to enable precipitation. Thereby, preferably the $CO_2$ mole fraction in the gas mixture is at least 0.15, more preferably at least 0.020, although most preferably the $CO_2$ mole fraction in the gas mixture may be as high as 1, to ensure that an electrolyte redox potential may be achieved in the catholyte which favours precipitation. Too low $CO_2$ partial pressures on the other hand may slow down the reaction rate.

Advantageously the $CO_2$ gas flow rate is maintained in a range which permits to optimize mass transfer, thereby minimizing metal deposition at the gas diffusion electrode, and promoting $H_2$ diffusion into the liquid phase. The skilled person will be capable of adapting the the $CO_2$ gas flow rate taking into account the dimensions of the electrochemical reactor, the concentration of the precursor compounds in the catholyte, etc.

It shall be clear to the skilled person that the cathode compartment may contain a catholyte, and that in the course of the process of this invention electrolyte may be supplied to the cathode compartment at a suitable flow rate, for example in support of achieving a desired mass flow rate.

In a preferred embodiment, the electrochemical potential to which the gas-diffusion cathode is subjected, is a reducing potential relative to a reference electrode, preferably below the thermodynamic pH-potential equilibrium region of stability of $CO_2$ in water, more preferably below the region of thermodynamic stability of water, preferably not within the region of thermodynamic stability of hydrogen to ensure water electrolysis to form hydrogen. The electrochemical potential at which $CO_2$ reduction occurs as well as water electrolysis is well known to the skilled person.

Advantageously to the electrode a charge will be applied of between -10 and -50 mAcm$^{-2}$, depending on whether formation of larger particles is envisaged, and metal deposition is favoured over $H_2$ production. Values above -50 A cm$^{-2}$ may cause an over production of $H_2$ and may cause the gas diffusion electrode to function improperly because of an increasing cell resistance/cell potential.

List of figures.

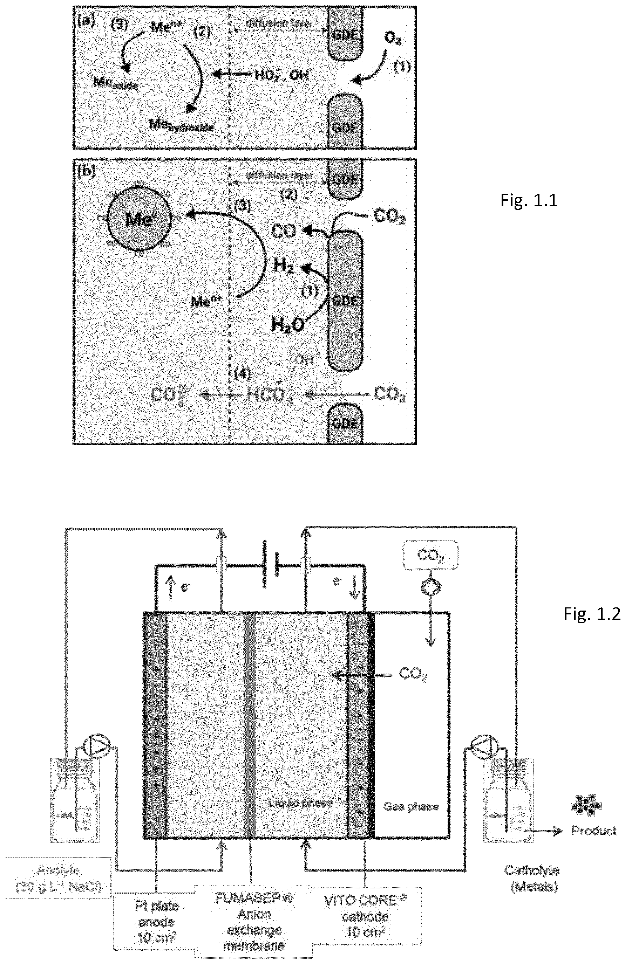

- Fig. 1.1 shows the reactions that occur in the cathode compartment when (a) using $O_2$, and (b) using $CO_2$, as the gas feedstock to be electrochemically reduced. In (a), the products of the oxygen reduction reaction (ORR) (1) are oxidizing chemical species that turn metal ions into metal oxides (2) or hydroxides (3) nanoparticles. In (b), the H2 from the water reduction (WRR) (1), acts a reducing agent while CO from the CO2 reduction reaction (CRR) (2) acts as a capping agent for the synthesis of elemental nanoparticles from metal ions in solution (3). The equilibrium of unreacted CO2 to HCO3- and CO32- (4) is crucial to consume the OH- generated in the WRR and CRR and interfere with the process.
- Fig. 1.2 is a schematic representation of an electrochemical reactor suitable for use with this invention.
- Figure 2.1 Evolution of pH vs time in example 2 during reduction of CO2 at -1.4 V vs Ag/AgCl Rh strip solution. *Sampling points
- Figure 2.2 Evolution of the Rh concentration as function of the pH of the Rh strip in example 2 during the GDEx process. Data above each column represents the % of metal removal.
- Figure 3.1 shows the evolution of pH and concentration of Rh vs time in example 3 during reduction of CO2 at -1,4 V vs Ag/AgCl.
- Figure 3.2 shows the XRD pattern of the product obtained in example 3.
- Figure 4.1 shows the evolution of pH vs time during reduction of CO2 at -1,4 V vs Ag/AgCl of the leachate solution of example 4. Inset, color changes of the solution through time. *Sampling points
- Figure 4.2 shows the evolution of PGM concentration vs time during the reduction of CO2 with GDEx at -1,4 V vs Ag/AgCl of the leachate solution of example 4.
- Figure 4.3 shows the XRD pattern of the product obtained using CO2 as the gas feed for the GDEx process of example 4.
- Figure 5.1 shows the evolution of pH vs time during reduction of CO2 at -1,4 V vs Ag/AgCl of the leachate solution. Inset, color changes of the solution through time. *Sampling points. In this Figure, Sample 1 refers to the leachate shown in Example 4, Figure 4.1, whereas Sample 2 corresponds to the leachate used in this example 5.
- Figure 5.2 Evolution of PGM concentration vs time during the reduction of CO2 with GDEx at -1,4 V vs Ag/AgCl of the leachate solution of example 5.
- Figure 5.3 shows the XRD pattern of the product obtained using CO2 as the gas feed for the GDEx process in example 5.

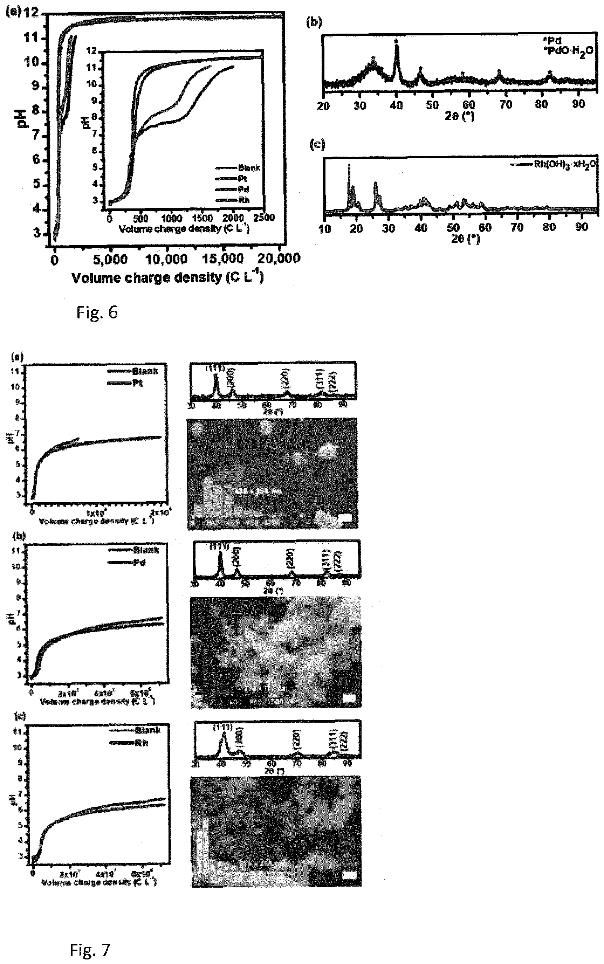

- Fig 6. a) Evolution of pH as function of charge consumed throughout the GDEx process when CO2 is replaced with Ar. b) X-ray diffraction pattern of the product obtained for the Pd solution. c) X-ray diffraction pattern of the product obtained for the Rh solution of example 6.
- Fig. 7. Left: Evolution of pH a function of the charge consumed per unit volume throughout the GDEx process when Ar is flowed at the gas phase and $CO_2$ is bubbled at the catholyte reservoir yielding elemental nanoparticles. Right: X-Ray diffraction patterns (up) and SEM micrographs and distribution histograms (down) of the elemental nanoparticles. The withe scale bar is 1 μm for the following metals : (a) Pt; (b) Pd; (c) Rh of example 7.

The invention is further illustrated in the examples below.

**Materials and Methods.**

**Chemicals.**

Hexachloroplatinic (IV) acid (H2PtCl6, Pt 39.93 wt%) (Johnson Matthey), palladium (II) chloride (PdCl2, 99.9%) (Sigma-Aldrich), rhodium (III) chloride hydrate (RhCl3·xH2O, 99.98%) (Sigma-Aldrich), sodium chloride (NaCl, 99.5%) (Acros Organics), hydrochloric acid (HCl, 37 wt%) (Sigma-Aldrich), carbon dioxide (CO2, 99.998%) (Air Liquide), and argon (Ar, 99.99%) (Air Liquide) were purchased and used as received from different sources without any further purification. Demineralized water was used throughout the experiments to prepare aqueous solutions.

**Electrochemical reactor.**

The electrochemical reactor (Fig 1.2) consisted in a three-compartment electrochemical cell. Through the first compartment, gas (i.e. $CO_2$, Ar) flows at a fixed rate, with a set overpressure, at the hydrophobic layer of the gas diffusion electrode (GDE). The catholyte and anolyte flow from, and to, 3-necked bottles serving as reservoirs, through the respective cell compartment. Both, catholyte and anolyte compartment, are separated by a FUMASEPZ® FAP-4130-PK anion exchange membrane. Both liquid compartments have an exposed surface area of 10 cm2 and a volume of 21 cm3. The GDE (VITO CORE®)1 was composed of an outer active carbon-polytetrafluoroethylene (C-PTFE with a C to PTFE ratio of 80:20) layer pressed onto a stainless-steel mesh serving as current collector. The active carbon employed was Norit® SX 1G (Cabot, Europe). The projected surface area of such cathode was of 10 cm2, with a BET specific surface area of ~450 m2 g-1 for the PTFE-bound active layer. A Ag/AgCl (3M KCl) electrode was used as reference electrode, placed via Luggin capillary close to the GDE. A platinum-coated tantalum plate electrode (Pt 10 μm thickness) was used as anode, this anode generated O2 or Cl2, which had a negligible influence on the electrochemical (cathodic) process and products of interest.

**Synthesis procedure.**

Stock solutions of precursor compounds of three platinum group metal ions (PGMs) (H2PtCl6, PdCl2, RhCl3) 0.1 M were prepared in NaCl 0.5 M and used to prepare the corresponding working solutions. The background electrolyte for the GDEx process consisted in a NaCl 0.5 M solution pH 3 adjusted with concentrated HCl. The catholyte solutions were prepared by mixing the background electrolyte and the PGMs stock solutions in order to have a final conctration of Pt4+, Pd2+ and Rh3+ of 3.0 mM, respectively. The background electrolyte alone (i.e., without PGMs) was used as anolyte. 250 mL or 100 mL of the catholyte and anolyte were collocated in the 3-necked glass bottles and connected to the electrochemical reactor using marprene tubing (Watson-Marlow) and pumped to their respective chamber with a flow rate of 40 mL min-1 using a peristaltic pump (530, Watson-Marlow).

The gases (i.e., $CO_2$, Ar) were flowed in the gas chamber at 200 mL min-1, with an overpressure of 20 mbar. The solutions and gases were flushed through the cell for 15 minutes before starting the experiments (without electrode polarization). Chronopotentiomemetric experiments were carried out in a batch mode at -10 mA cm-2 using a Bio-Logic (VMP3) multichannel potentiostat. pH, charge and potential were monitored throughout all the experiments.

The pH was measured every 5 seconds with a Metrohm 781 pH/ion meter equipped with a Metrohm Unitrode pH electrode. Aliquots of 1 ml were taken from the catholyte at different times, 100 μL of HCl 0.1 M were added to quench the reaction and avoid precipitation of unreacted metal ions. The aliquots were centrifuged, and filtered with a 0.3 μm pore filter.

The filtered solutions were analyzed with an inductive coupled plasma-optical emission spectrometer (ICP-OES) (Varian 750 ES) to monitor the metal concentration in the liquid phase. The turning from a clear solution to a dark turbid solution was an indicative of the formation of the nanoparticles. The experiments were stopped when, after centrifuging an aliquot of the catholytethe supernatant became transparent. The nanoparticles were left to settle down overnight. The supernatant was decanted, and the nanoparticles resuspended using demineralized water and centrifuged at 10000 rpm with a Hettich Rotina 35 centrifuge to remove the remaining NaCl. The washing procedure was repeated until the conductivity of the supernatant was similar to the demineralized water. The products were dried under Ar atmosphere at room temperature and kept under storage for further characterization.

**Characterization.**

X-ray diffraction (XRD): The dried samples were analysed by powder X-ray diffraction in Seifert 3003 T/T diffractometer operated at a voltage of 40 kV and a current of 40 mA with Cu K$\alpha$ radiation ($\lambda$ = 1.5406 Å). The data were collected in the 20°-120° (2$\theta$) range with a step size of 0.05°. The profile fitting of the powder difraction patterns was performed with Highscore Plus (Malvern Pannalytical) using the inorganic crystal structure database (ICSD). Crystallite sizes were calculated using the Scherrer equation:2

$$D=(\kappa\lambda)/(\beta \cos\theta) \quad (1)$$

where D is the average crystallite size of the crystalline domains, $\kappa$ is the Scherrer constant, tipically considered 0.89 for spherical particles, $\lambda$ is the X-ray wavelength, $\beta$ is the line broadening at half the maximum intensity (FWHM) in radians, and $\theta$ (°) is the Bragg angle at a reflecting plane.

Electron Scanning Microscopy (SEM): Micrographs of the dry samples were taken with a Philips XL30 FEG scanning electron microscope, Images presented were taken with secondary electrones and an acceleration voltage of 30 kV. The samples were prepared by dispersing the powders in ethanol and sonicating for 30 minutes. Then 10 $\mu$L were dropped in a aluminum foil mounted on a sample holder. The mean particle size and distribution were evaluated by counting at least 100 particles using the software ImageJ (NIH). After that, data were fitted to a lognormal distribution to obtain the mean particle size and standard deviation.

**Example 1 - Blank experiment.**

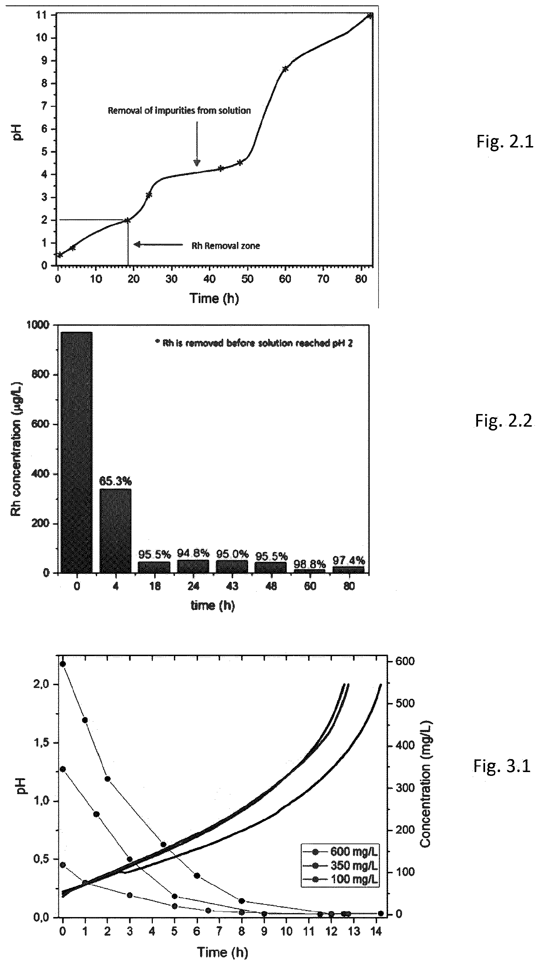

In Fig. 2 (gray lines) is shown the evolution of pH as the CRR progressed as function of the charge consumed per volume unit, in the absence of PGMs (blank). Starting from acidic conditions (i.e., pH ~3), an increase of the bulk pH from 3 to ~6 when only 500 C L$^{-1}$ had been consumed, after that, the pH remained buffered until ~7.5 by the end of the experiment ($10^4$ C L$^{-1}$ consumed). Both, the CO2 reduction reaction to CO (reactions 1 and 2) and the water reduction reaction to H$_2$ (reaction 3) yield OH$^-$, resulting in a fast increase of the pH in the electrolyte.[15,24] In such a mildly alkaline environment, unreacted CO$_2$ dissolves in the catholyte (reaction 4) as HCO$_3^-$. The latter can be further deprotonated in alkaline pH to CO$_3^{2-}$ (reaction 5). Both equilibrium reactions consume part of the OH$^-$ anions generated at the cathode, resulting in the buffering of the electrolyte bulk.[24]

$$CO_2 + OH^- \rightleftarrows HCO_3^- \qquad (4)$$

$$HCO_3^- + OH^- \rightleftarrows CO_3^{2-} + H_2O \qquad (5)$$

**Example 2.**

A stripping solution in 1 M HCl as the matrix, containing 1.035 M of chloride anions, 0.7 M of sulfate anions, and a pH of -0.02, and concentrations of the following elements in mg L$^{-1}$, was used as the starting solution: 0.01 Pt, 0.01 Pd, **2.17 Rh,** 1830 Al, 15.2 Si, 315 Mg, 101 Ce, 476 Zr, 0.29 Ba, 15.2 La, 24.4 Fe, 16.1 Ti, 11.3 Sr, 10.6 Nd, 22519 S, 62,2 Ca, 144 K, 42752 Na, <0.01 P, 0.76 Zn, 3.31 Ni, <0.01 Cu, 1.48 Ag, 3.79 Cr, 0.78 V, <0.01 Co, 0.64 As, 3.16 Mn, 0.78 Pb, 0.90 Mo, 3.80 Sn, <0.01 Ta, <0.01 Bi, <0.01 Sb, 46.6 Sc, 0.32 Au, and <0.01 Cd. This stripping solution was issued from the pre-treatment of spent catalytic converters. Rhodium is highlighted as it is intended that by applying the method object of this invention, it can be selectively separated from the rest of the components so that the Rh can be further reused.

The operational conditions of the method object of this invention were the same as those presented in Example 1.

After starting the polarization at the cathode upon which CO$_2$ reduction takes place during GDEx, the pH of the system evolves through time, as shown in Figure 2.a. Simultaneously, the removal of Rh progresses as shown in Figure 2.c, whereas the concentration of the most relevant components in the solution evolves as presented in Table 1. By 18 h of processing, the system has reached a pH of 2 and 95.5% of Rh has been removed from the solution (Table 2.1). At that point, most impurities are kept in solution. Furthermore, those impurities which are removed, they precipitate as hydroxides on the surface of the electrode, as they cannot be reduced in the conditions provided to their elemental forms. Thus, pure elemental rhodium nanoparticles are obtained.

**Table 2.1.**

| % of metal removal | | | | | | | |
|---|---|---|---|---|---|---|---|
| Metal | % of metal removal after time indicated (hours) | | | | | | |
| | 4h | 18h | 24h | 43h | 48h | 60h | 80h |
| Rh | 65.3 | 95.5 | 94.8 | 95.0 | 95.6 | 98.8 | 97.4 |
| Al | 10.5 | 20.5 | 24.3 | 73.0 | 91.2 | 99.6 | 99.2 |
| Ba | 7.9 | 20.4 | 26.5 | 40.2 | 43.4 | 91.0 | 94.7 |
| Ce | 9.5 | 16.6 | 21.5 | 33.6 | 37.0 | 99.9 | 99.9 |
| Cr | -18.7 | -2.6 | 3.3 | 86.4 | 97.5 | 98.8 | 95.7 |
| Fe | -10.0 | 2.5 | 8.3 | 89.9 | 99.1 | 99.9 | 99.9 |
| La | 10.7 | 18.7 | 23.4 | 35.0 | 38.0 | 99.9 | 99.9 |
| Mg | 10.4 | 20.4 | 25.0 | 36.7 | 36.8 | 96.2 | 99.6 |
| Nd | 10.2 | 18.1 | 22.4 | 34.5 | 37.8 | 99.9 | 99.9 |
| Sr | 10.1 | 21.0 | 24.9 | 36.1 | 36.0 | 76.4 | 81.0 |
| Ti | 8.9 | 26.8 | 31.0 | 96.7 | 99.9 | 99.9 | 99.9 |
| V | 8.0 | 19.1 | 26.3 | 96.4 | 99.9 | 99.9 | 97.6 |
| Zr | 10.1 | 28.2 | 32.8 | 88.7 | 98.7 | 99.5 | 99.3 |

## Example 3.

Synthetic solutions aiming to partly simulate the stripping solution of example 2 were prepared in 1 M HCl as the matrix, containing the following elements in mg $L^{-1}$, 1000 Fe, 1000 Mg, 5000 Al, and Rh in the range of 600-100, to assess the effect of its concentration. $RhCl_3$ was used as the Rh precursor. The selective recovery of Rh by GDEx using $CO_2$ as the gas-feed was aimed. The operational conditions of the method object of this invention were the same as those presented in the previous Examples. In this case, the process was only let to evolve up to pH 2, which his the range in which the highest Rh recovery rate took place in Example 2.

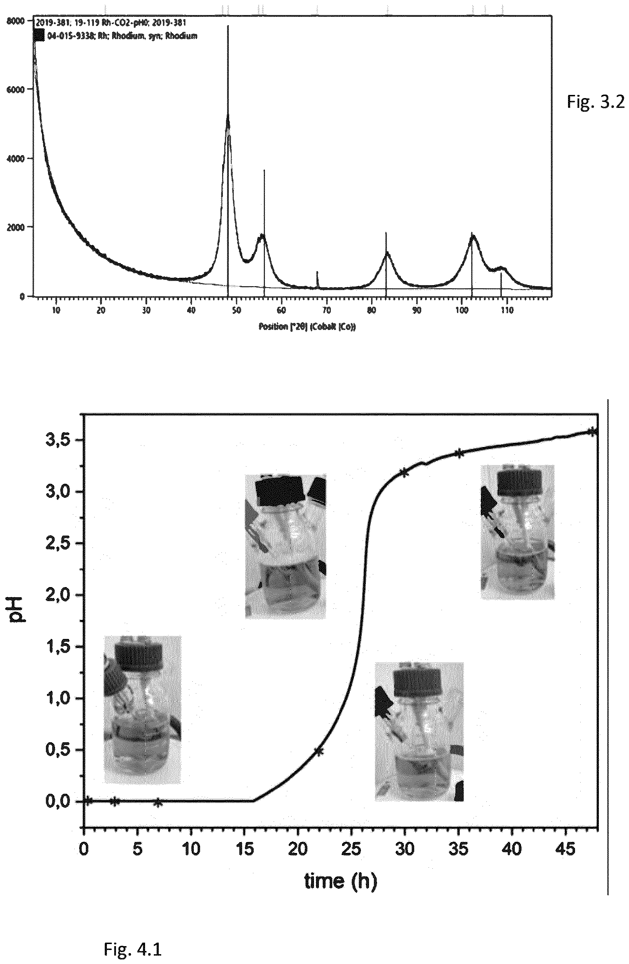

Figure 3.1 shows the evolution of pH and the concentration of Rh through time. After 12 h of processing and reaching pH ~1.5, >98% of Rh had been removed from the solution and by the end of the experiment 98.1% of Rh had been removed from the solution containing 100 mg $L^{-1}$ Rh, 99.3% of Rh had been removed from the solution containing 350 mg $L^{-1}$ Rh, and 99.5 % of Rh had been removed from the solution containing 600 mg $L^{-1}$ Rh, as shown in Table 3.1. The % of removal from the rest of the metal ions in solution was highest when using the solution containing 100 mg $L^{-1}$ Rh. However, in all instances the removal of these impurities was minimal. Based on a quantitative evaluation of the resulting product, 70% of the Rh initially present in the solution was recovered into elemental Rh nanoparticles. The purity of the product obtained was 100%, as shown by its XRD pattern (Figure 3.b). The rest of the Rh (30%) was lost by deposition in the electrode surface together with the impurities.

Table 3.1 % of metal removal of the metals in the Rh simulated strip at the end of the experiment

| | % of metal removal | | | |
|---|---|---|---|---|
| | Mg | Al | Fe | Rh |
| 600 mg/L | 4.8 | 4.1 | 7.6 | 99.5 |
| 350 mg/L | 9.9 | 8.8 | 11.0 | 99.3 |
| 100 mg/L | 17.4 | 15.8 | 5.3 | 98.1 |

## Example 4.

A leachate solution was obtained from the pre-treatment of spent catalytic converters. The leachate was supported in a solution of HCl 6 M + $H_2O_2$ 31% (9:1v/v), with a pH of -0.873 and an ionic conductivity of 555 mS/cm. The concentration of the different elements in the leachate, in mg L[1], was: 84.25 Pt, 136.5 Pd, 21.5 Rh, 11650 Al, 3461 Mg, 1687 Ce, 1100 Fe, 0.1 Zr, 10.5 Ba, 220 La, 78.1 Ti, 147 Sr, 98.4 Nd, 182 Cr, 4 V, <0.01 Cu. The PGMs are highlighted as it is intended that by applying the method object of this invention, they can be selectively separated from the rest of the components, for further reuse.

The operational conditions of the method object of this invention were the same as those presented in the previous examples.

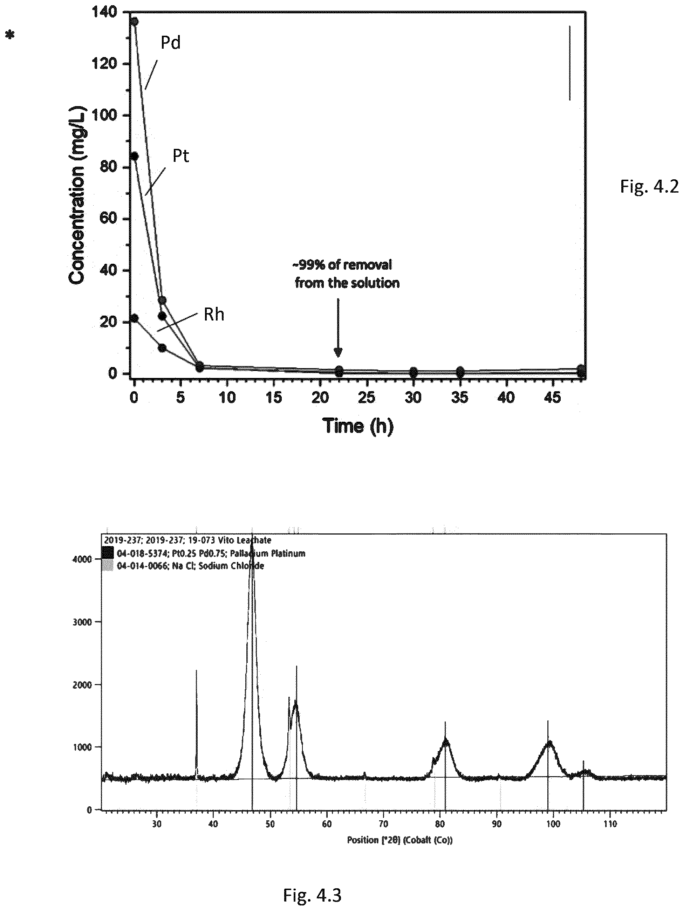

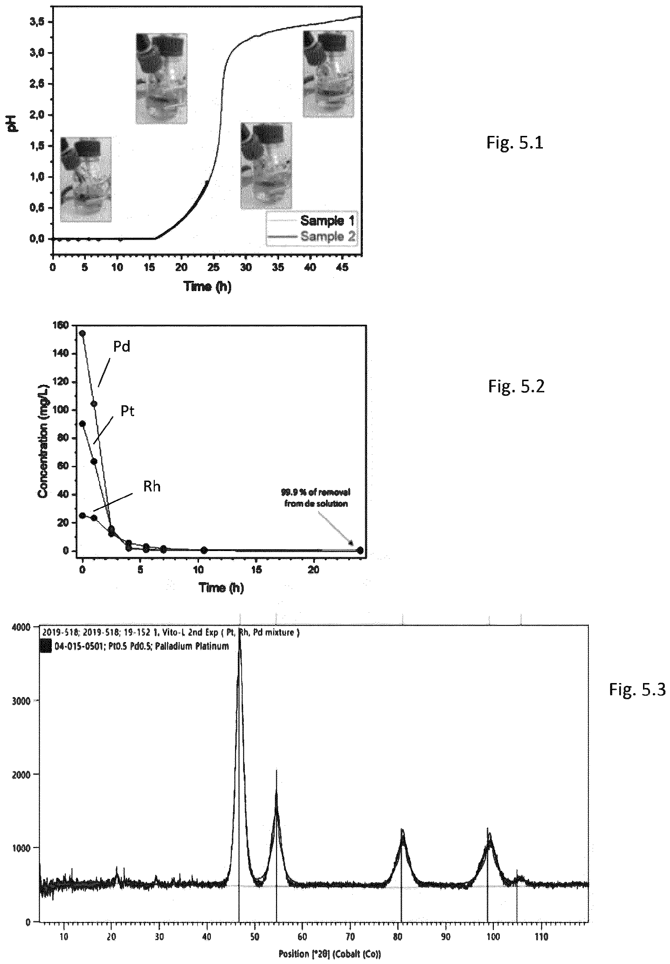

Figure 4.1 shows the evolution of pH through the experiment. Diffierent changes of color occurring during processing the leachate with GDEx are highlighted. At about 22 h of processing, pH 0.5 was reached (Figure 5.a) and ~99% of the PGMs had been removed from the leachate (Figure 4.2). Table 4.1 shoes the evolution on the concentration of the different components of the leachate, from which the miminal removal from solution from non-PGM elements is noteworthy, especially up to 7 h of processing, while the highest PGM removal rate has taken place. As shown in Figure 4.3, the product recovered from the processing consisted of a mixture of pure PGMs.

Table 4.1. % of metal removal from the leachate at different sampling times.

| Metal % of metal removal from the leachate at different sampling times. | | | | | | |
|---|---|---|---|---|---|---|
|  | 3h | 7h | 22h | 30h | 35h | 48h |
| Pt | 73,5 | 97,4 | 99,4 | 99,9 | 99,8 | 99,5 |
| Pd | 79,2 | 97,7 | 98,9 | 99,3 | 99,2 | 98,6 |
| Rh | 53,8 | 89,6 | 99,2 | 99,8 | 99,7 | 99,3 |
| Al | 2,9 | 5,1 | 5,9 | 12,0 | 13,4 | 16,9 |
| Ba | 3,1 | 1,0 | 10,3 | 15,6 | 51,4 | 67,3 |
| Ce | 2,1 | 3,9 | 5,3 | 11,4 | 11,5 | 16,9 |
| Cr | 1,1 | 5,7 | 6,7 | 10,6 | 13,7 | 76,3 |
| Fe | 3,2 | 9,3 | 9,0 | 12,3 | 15,5 | 52,5 |
| La | 2,4 | 2,7 | 5,7 | 10,8 | 10,4 | 16,8 |
| Mg | 3,6 | 5,7 | 7,1 | 12,4 | 15,1 | 16,3 |
| Nd | 2,2 | 3,5 | 7,3 | 21,1 | 51,2 | 69,0 |
| Sr | 1,3 | -0,2 | 9,3 | 18,7 | 50,4 | 67,1 |
| Ti | 0,1 | 3,0 | 7,9 | 45,0 | 61,2 | 62,8 |
| V | 6,3 | 6,5 | 14,6 | 17,7 | 50,7 | 74,1 |
| Zr | -0,3 | 11,9 | 58,2 | 85,7 | 87,2 | 89,6 |

**Example 5.**

A leachate solution was obtained from the pre-treatment of spent catalytic converters. The leachate was supported in a solution of HCl 6 M + $H_2O_2$ 31% (9:1v/v), with a pH of -0.873 and an ionic conductivity of 555 mS/cm. The concentration of the different elements in the leachate, in mg L[1], was: 90.25 Pt, 154.5 Pd, 25.1 Rh, 11750 Al, 3570 Mg, 1640 Ce, 498 Fe, 0.11 Zr, 4.36 Ba, 289 La, 88.1 Ti, 153 Sr, 104 Nd, 21.5 Cr, 4.4 V, 9.5 Cu. The PGMs are highlighted as it is intended that by applying the method object of this invention, they can be selectively separated from the rest of the components, for further reuse.

The operational conditions of the method object of this invention were the same as those presented in the previous examples.

Figure 5.1 shows the evolution of pH through the experiment. Different changes of color occurring during processing the leachate with GDEx are highlighted. As in Example 1 it was shown that by 22 h of processing most of the PGMs were removed, the processing time of this leachate by GDEx stopped by 22 h (i.e., see comparison between the pH evolution of both experiments in Figure 5.1). The maximum pH attained was ~0.75, at which 99.9% of the PGMs had been removed from the leachate (Figure 5.2). Nevertheless, in Table 5.1 it is shown that the maximum PGM recovery rate took place within the first 7 h of processing. As shown in Figure 5.3, the product recovered from the processing consisted of a mixture of pure PGMs.

**Example 6. replacing the $CO_2$ by Ar at the gas compartment**

To demonstrate the role of the $CO_2$ equilibrium to buffer the pH during the GDEx process, $CO_2$ was replaced by Ar and the cathode was polarized at the same current density. As expected, when only the water reduction reaction takes place, due to the generation of $OH^-$ ions, the pH increases from 3 to 11.5 without any noticeable buffered zone. The same experiment was repeated with solutions containing the metals. For the case of Pd and Rh, the $OH^-$ displaces the $Cl^-$ of the $[PdCl_4]^{2-}$ and $[RhCl_6]^{3-}$ to form hydroxide complexes. $Rh(OH)_3$ precipitate as such, while $Pd(OH)_2$ is highly unstable and is easily transformed into hydrated PdO,[13] as is shown in the X-ray diffraction patterns (Fig. S4b and Fig. S4c). The consumption of $OH^-$ is noted in the pH plateau in the experiments with Pd and Rh, before reaching pH 11. For the case of Pd, in the X-ray diffraction patterns (Fig. S3b) peaks corresponding to the metallic Pd were identified suggesting that a small amount to $Pd^{2+}$ was reduced to $Pd^0$. These results highlight the importance of the $CO_2$ equilibrium in the GDEx process.

**Example 7 flowing Ar at the gas phase of the GDEx reactor and bubblinc $CO_2$ in the catholyte reservoir.**

To demonstrate the role of the CO generated during the $CO_2$ reduction at the GDE during the GDEx process, Ar was flowed in the gas compartment of the reactor and $CO_2$ was bubbled in the catholyte reservoir. The cathode was polarized at the same current density. At this conditions water reduction to $H_2$ and $CO_2$ equilibrium at the bulk electrolyte take place but not the $CO_2$ reduction to CO. As expected, the pH of the catholyte is buffered (in both, blank and containing metals experiments) at ~6. As in the GDEx process (in which $CO_2$ is reduced at the GDE) metallic nanoparticles were obtained. However the average diameter of these products was bigger and with a broader distribution. These results highlight the importance of the formation and presence of CO in the GDEx process to control the size and distribution of the products obtained.

List of references.

1. P. Hervés, M. Pérez-Lorenzo, L. M. Liz-Marzán, J. Dzubiella, Y. Lu and M. Ballauff, Chem. Soc. Rev., 2012, 41, 5577-5587.
2. D. Banham and S. Ye, ACS Energy Lett., 2017, 2, 629-638.
3. E. Antolini, J. Power Sources, 2007, 170, 1-12.
4. S. Sui, X. Wang, X. Zhou, Y. Su, S. Riffat and C. Liu, J. Mater. Chem. A, 2017, 5, 1808-1825.
5. A. P. Reverberi, N. T. Kuznetsov, V. P. Meshalkin, M. Salerno and B. Fabiano, Theor. Found. Chem. Eng., 2016, 50, 59-66.
6. L. D. Rampino and F. F. Nord, J. Am. Chem. Soc., 1941, 63, 2745-2749.
7. T. S. Ahmadi, Z. L. Wang, T. C. Green, A. Henglein and M. A. El-Sayed, Science (80-.)., 1996, 272, 1924 LP - 1925.
8. J. M. Petroski, Z. L. Wang, T. C. Green and M. A. El-Sayed, J. Phys. Chem. B, 1998, 102, 3316-3320.
9. B. Wu, N. Zheng and G. Fu, Chem. Commun., 2011, 47, 1039-1041.
10. G. Chen, Y. Tan, B. Wu, G. Fu and N. Zheng, Chem. Commun., 2012, 48, 2758-2760.
11. S.-H. Chang, M.-H. Yeh, C.-J. Pan, K.-J. Chen, H. Ishii, D.-G. Liu, J.-F. Lee, C.-C. Liu, J. Rick, M.-Y. Cheng and B.-J. Hwang, Chem. Commun., 2011, 47, 3864-3866.
12. C. Zhang, S. Y. Hwang and Z. Peng, J. Mater. Chem. A, 2013, 1, 14402-14408.
13. C. F. Zinola, J. Electrochem. Soc., 2017, 164, H170-H182.
14. C. Delacourt, P. L. Ridgway, J. B. Kerr and J. Newman, J. Electrochem. Soc., 2008, 155, B42.
15. T. Burdyny and W. A. Smith, Energy Environ. Sci., 2019, 12, 1442-1453.
16. R. A. Prato, V. Van Vught, S. Eggermont, G. Pozo, P. Marin, J. Fransaer and X. Dominguez-Benetton, Sci. Rep., 2019, 9, 15370.
17. G. Pozo, P. de la Presa, R. Prato, I. Morales, P. Marin, J. Fransaer and X. Dominguez-Benetton, Nanoscale, 2020, 12, 5412-5421.
18. G. Pozo, D. van Houtven, J. Fransaer and X. Dominguez-Benetton, React. Chem. Eng., 2020, 5, 1118-1128.
19. R. A. Prato M., V. Van Vught, K. Chayambuka, G. Pozo, S. Eggermont, J. Fransaer and X. Dominguez-Benetton, J. Mater. Chem. A, 2020, 8, 11674-11686.
20. N. Yang, S. R. Waldvogel and X. Jiang, ACS Appl. Mater. Interfaces, 2016, 8, 28357-28371.
21. J. Albo, M. Alvarez-Guerra, P. Castaño and A. Irabien, Green Chem., 2015, 17, 2304-2324.
22. H. Ooka, M. C. Figueiredo and M. T. M. Koper, Langmuir, 2017, 33, 9307-9313.
23. W. Zhou, J. Wu and H. Yang, Nano Lett., 2013, 13, 2870-2874.
24. N. Gupta, M. Gattrell and B. MacDougall, J. Appl. Electrochem., 2006, 36, 161-172.

25. R. E. Cameron and A. B. Bocarsly, Inorg. Chem., 1986, 25, 2910-2913.
26. C. F. Holder and R. E. Schaak, ACS Nano, 2019, 13, 7359-7365.
27. H. Einaga and M. Harada, Langmuir, 2005, 21, 2578-2584.
28. A. Henglein and M. Giersig, J. Phys. Chem. B, 2000, 104, 6767-6772.
29. P. Jeanty, C. Scherer, E. Magori, K. Wiesner-Fleischer, O. Hinrichsen and M. Fleischer, J. CO2 Util., 2018, 24, 454-462.

**Claims**

1. A process for recovering platinum group metals from a feed containing one or more precursor compounds of one or more platinum group metal ions, wherein the process comprises the steps of

    (i) supplying to a cathode compartment of an electrochemical cell equipped with a cathode comprising a gas diffusion electrode with a porous electrochemically active material, the feed containing the one or more precursor compounds to form a liquid phase in the cathode compartment,
    (ii) supplying a $CO_2$ containing gas to the cathode compartment,
    (iii) applying a potential to the cathode which is such as to cause electrochemical reduction of the $CO_2$ to CO,
    (iv) and recovering from the liquid phase precipitated particles of the one or more platinum group metals in elemental form.

2. The process of claim 1, wherein the $CO_2$ is supplied to the gas diffusion electrode.

3. The process of claim 1 or 2, wherein the liquid phase contains one or more solvents selected from the group comprising water, a protic solvent capable of generating $H_2$, an organic solvent selected from the group of dimethylsulfoxide (DMSO), dimethylformamide (DMF), acetone, an ionic liquid, a deep eutectic solvent, and mixtures of two or more hereof.

4. The process of claim 3, wherein the protic solvent is selected from the group comprising an alcohol, ammonia, an amine, an amide, an ionic liquid, acetic acid, and mixtures of two or more of the afore mentioned compounds.

5. The process of claim 4, wherein the alcohol is selected from the group comprising methanol, ethanol, n-propanol and isopropylalcohol and mixtures of two or more hereof.

6. The process of any one of the previous claims, wherein the feed containing the one or more platinum group metal ions is a liquid feed containing an aqueous solution of the one or more precursor compounds.

7. The process according to any one of the previous claims, wherein the feed is liquid feed, in particular a solution, containing the one or more precursor compounds of the one or more platinum group metal ions dissolved therein, or a dispersion or a suspension of the one or more precursor compounds in a liquid dispersant.

8. The process of any one of the previous claims, wherein the liquid phase has a temperature which ranges from 10°C to 100°C, preferably from 15-75°C, more preferably from 15-50°C, most preferably room temperature.

9. The process according to any one of the previous claims, wherein $CO_2$ is supplied as a pure gas or in a mixture with one or more further gases.

10. The process according to any one of the previous claims, wherein the feed of the platinum group metals contains one or more metals selected from the group of Pd, Pt, Rh, Ru, Os, Ir.

11. The process according to any one of the previous claims, wherein to the cathode a charge is applied of between -10 and -1000 mAcm$^{-2}$, preferably below 50 mA cm$^{-2}$.

12. The process according to any one of the previous claims, wherein the precipitated particles are nanoparticles with a particle size of maximum 100 nm.

13. The process according to any one of the previous claims, wherein the precipitated particles have a particle size of at least 100 nm.

**14.** The process according to any one of the previous claims, wherein the anode is a Pt electrode.

**15.** The process according to any one of the previous claims, wherein the cathode is a carbon based gas diffusion electrode.

Fig. 1.1

Fig. 1.2

Fig. 2.1

Fig. 2.2

Fig. 3.1

Fig. 3.2

Fig. 4.1

Fig. 4.2

Fig. 4.3

Fig. 5.1

Fig. 5.2

Fig. 5.3

Fig. 6

Fig. 7

Europäisches
Patentamt

European
Patent Office

Office européen
des brevets

# EUROPEAN SEARCH REPORT

**Application Number**

EP 21 16 5681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 3 242 963 B1 (VITO NV [BE]) 26 September 2018 (2018-09-26) * claims 1,2 * * paragraph [0040] * * paragraph [0086] * ----- | 1-15 | INV. C22B11/00 C25B1/00 |
| Y | US 5 997 719 A (SHOR PETER S [US]) 7 December 1999 (1999-12-07) * claims 1-5, 10 * * column 2, line 25 - line 30 * ----- | 1-15 | |
| A | ANTOLINI ET AL: "Catalysts for direct ethanol fuel cells", JOURNAL OF POWER SOURCES, ELSEVIER SA, CH, vol. 170, no. 1, 30 June 2007 (2007-06-30) , pages 1-12, XP022098146, ISSN: 0378-7753, DOI: 10.1016/J.JPOWSOUR.2007.04.009 * the whole document * ----- | 1-15 | |
| A | ALBO JONATHAN ET AL: "Cu2O-loaded gas diffusion electrodes for the continuous electrochemical reduction of CO2 to methanol", JOURNAL OF CATALYSIS, ACADEMIC PRESS, DULUTH, MN, US, vol. 343, 8 December 2015 (2015-12-08), pages 232-239, XP029772579, ISSN: 0021-9517, DOI: 10.1016/J.JCAT.2015.11.014 * the whole document * ----- | 1-15 | TECHNICAL FIELDS SEARCHED (IPC) C22B C25B |

The present search report has been drawn up for all claims

| Place of search | Date of completion of the search | Examiner |
|---|---|---|
| The Hague | 15 September 2021 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 067 514 A1**

## ANNEX TO THE EUROPEAN SEARCH REPORT
## ON EUROPEAN PATENT APPLICATION NO.

EP 21 16 5681

15-09-2021

| Patent document cited in search report | | Publication date | Patent family member(s) | | Publication date |
|---|---|---|---|---|---|
| EP 3242963 | B1 | 26-09-2018 | CA | 2973289 A1 | 14-07-2016 |
| | | | CN | 107532309 A | 02-01-2018 |
| | | | DK | 3242963 T3 | 14-01-2019 |
| | | | EP | 3042981 A1 | 13-07-2016 |
| | | | EP | 3242963 A1 | 15-11-2017 |
| | | | ES | 2702082 T3 | 27-02-2019 |
| | | | JP | 2018508659 A | 29-03-2018 |
| | | | US | 2018023201 A1 | 25-01-2018 |
| | | | WO | 2016110597 A1 | 14-07-2016 |
| US 5997719 | A | 07-12-1999 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3242963 B1

**Non-patent literature cited in the description**

- **P. HERVÉS ; M. PÉREZ-LORENZO ; L. M. LIZ-MARZÁN ; J. DZUBIELLA ; Y. LU ; M. BALLAUFF.** *Chem. Soc. Rev.,* 2012, vol. 41, 5577-5587
- **D. BANHAM ; S. YE.** *ACS Energy Lett.,* 2017, vol. 2, 629-638
- **E. ANTOLINI.** *J. Power Sources,* 2007, vol. 170, 1-12
- **S. SUI ; X. WANG ; X. ZHOU ; Y. SU ; S. RIFFAT ; C. LIU.** *J. Mater. Chem. A,* 2017, vol. 5, 1808-1825
- **A. P. REVERBERI ; N. T. KUZNETSOV ; V. P. MESHALKIN ; M. SALERNO ; B. FABIANO.** *Theor. Found. Chem. Eng.,* 2016, vol. 50, 59-66
- **L. D. RAMPINO ; F. F. NORD.** *J. Am. Chem. Soc.,* 1941, vol. 63, 2745-2749
- **T. S. AHMADI ; Z. L. WANG ; T. C. GREEN ; A. HENGLEIN ; M. A. EL-SAYED.** *Science,* 1996, vol. 80, 272
- **J. M. PETROSKI ; Z. L. WANG ; T. C. GREEN ; M. A. EL-SAYED.** *J. Phys. Chem. B,* 1998, vol. 102, 3316-3320
- **B. WU ; N. ZHENG ; G. FU.** *Chem. Commun.,* 2011, vol. 47, 1039-1041
- **G. CHEN ; Y. TAN ; B. WU ; G. FU ; N. ZHENG.** *Chem. Commun.,* 2012, vol. 48, 2758-2760
- **S.-H. CHANG ; M.-H. YEH ; C.-J. PAN ; K.-J. CHEN ; H. ISHII ; D.-G. LIU ; J.-F. LEE ; C.-C. LIU ; J. RICK ; M.-Y. CHENG.** *Chem. Commun.,* 2011, vol. 47, 3864-3866
- **C. ZHANG ; S. Y. HWANG ; Z. PENG.** *J. Mater. Chem. A,* 2013, vol. 1, 14402-14408
- **C. F. ZINOLA.** *J. Electrochem. Soc.,* 2017, vol. 164, H170-H182
- **C. DELACOURT ; P. L. RIDGWAY ; J. B. KERR ; J. NEWMAN.** *J. Electrochem. Soc.,* 2008, vol. 155, B42
- **T. BURDYNY ; W. A. SMITH.** *Energy Environ. Sci.,* 2019, vol. 12, 1442-1453
- **R. A. PRATO ; V. VAN VUGHT ; S. EGGERMONT ; G. POZO ; P. MARIN ; J. FRANSAER ; X. DOMINGUEZ-BENETTON.** *Sci. Rep.,* 2019, vol. 9, 15370
- **G. POZO ; P. DE LA PRESA ; R. PRATO ; I. MORALES ; P. MARIN ; J. FRANSAER ; X. DOMINGUEZ-BENETTON.** *Nanoscale,* 2020, vol. 12, 5412-5421
- **G. POZO ; D. VAN HOUTVEN ; J. FRANSAER ; X. DOMINGUEZ-BENETTON.** *React. Chem. Eng.,* 2020, vol. 5, 1118-1128
- **R. A. PRATO M. ; V. VAN VUGHT ; K. CHAYAMBUKA ; G. POZO ; S. EGGERMONT ; J. FRANSAER ; X. DOMINGUEZ-BENETTON.** *J. Mater. Chem. A,* 2020, vol. 8, 11674-11686
- **N. YANG ; S. R. WALDVOGEL ; X. JIANG.** *ACS Appl. Mater. Interfaces,* 2016, vol. 8, 28357-28371
- **J. ALBO ; M. ALVAREZ-GUERRA ; P. CASTAÑO ; A. IRABIEN.** *Green Chem.,* 2015, vol. 17, 2304-2324
- **H. OOKA ; M. C. FIGUEIREDO ; M. T. M. KOPER.** *Langmuir,* 2017, vol. 33, 9307-9313
- **W. ZHOU ; J. WU ; H. YANG.** *Nano Lett.,* 2013, vol. 13, 2870-2874
- **N. GUPTA ; M. GATTRELL ; B. MACDOUGALL.** *J. Appl. Electrochem.,* 2006, vol. 36, 161-172
- **R. E. CAMERON ; A. B. BOCARSLY.** *Inorg. Chem.,* 1986, vol. 25, 2910-2913
- **C. F. HOLDER ; R. E. SCHAAK.** *ACS Nano,* 2019, vol. 13, 7359-7365
- **H. EINAGA ; M. HARADA.** *Langmuir,* 2005, vol. 21, 2578-2584
- **A. HENGLEIN ; M. GIERSIG.** *J. Phys. Chem. B,* 2000, vol. 104, 6767-6772
- **P. JEANTY ; C. SCHERER ; E. MAGORI ; K. WIESNER-FLEISCHER ; O. HINRICHSEN ; M. FLEISCHER.** *J. CO2 Util.,* 2018, vol. 24, 454-462